# EUROPEAN PATENT APPLICATION

(11) **EP 4 290 242 A1**
(43) Date of publication of application: **13.12.2023**
(21) Application number: 23177750.9
(22) Date of filing: 06.06.2023
(51) Int. Cl.: G01R 1/02, H04L 9/40

(54) **INFORMATION PROCESSING METHOD, INFORMATION PROCESSING APPARATUS, COMPUTER PROGRAM, AND NON-TRANSITORY COMPUTER-READABLE RECORDING MEDIUM**

(30) Priority: 09.06.2022 JP 2022093980
(71) Applicant: Yokogawa Electric Corporation, Tokyo 180-8750 (JP); Yokogawa Test & Measurement Corporation, Hachioji-shi, Tokyo 192-8566 (JP)
(72) Inventor: KOGA, Kazuma, Hachioji-shi, Tokyo 192-8566 (JP)
(74) Representative: Osha BWB

(57) **Abstract**

An information processing method by a controller (11) of an information processing apparatus includes receiving, by the controller (11) via a communication interface (13), screen information regarding measurement information on a physical quantity from one or more waveform analyzers (50) that acquire the measurement information. The acquired screen information is transmitted, by the controller (11) via the communication interface (13), to a plurality of operation terminals (70). A request for operation on the one or more waveform analyzers (50) through the screen information is received from a first operation terminal (70b) of the operation terminals (70). It is determined, by the controller (11), whether a control right to operate the one or more waveform analyzers (50) is granted to any operation terminal of the plurality of operation terminals (70) except the first operation terminal (70b). The control right is granted to the first operation terminal (70b) in response to determining that the control right is not granted to any operation terminal of the plurality of operation terminals (70) except the first operation terminal (70b).

## Description

### RELATED APPLICATION

The present application claims priority to Japanese Patent Application No. 2022-093980 filed on June 9, 2022.

### BACKGROUND

### TECHNICAL FIELD

The present disclosure relates to an information processing method, an information processing apparatus, a computer program, and a non-transitory computer-readable recording medium.

### DESCRIPTION OF THE RELATED ART

Waveform analyzers that measure physical quantities and analyze the measurement information are known. Patent Literatures (PTLs) 1 and 2 describe technology regarding systems in which such a waveform analyzer is connected to a network and measurement data can be referenced from another apparatus via the network.

### Patent Literature

PTL 1: JP 2020-190556 A
PTL 2: JP 2017-515449 A

### SUMMARY

### (Technical Problem)

One or more embodiments provide a technological improvement over conventional technologies. In particular, an information processing method, an information processing apparatus, a computer program, and a non-transitory computer-readable recording medium according to one or more embodiments may be able to improve systems in which a plurality of apparatuses is accessible to a plurality of waveform analyzers. This provides a practical, technological improvement over conventional technologies that would be readily appreciated by those skilled in the art. Further details regarding the various improvements and advantages will become apparent from the descriptions that follow.

### (Solution to Problem)

The solution to the problem is provided by the subject-matter of the independent claims. According to one aspect of the present disclosure, an information processing method is defined in claim 1.

Embodiments of the method are defined in the dependent claims.

According to a further aspect of the present disclosure, an information processing apparatus is defined in claim 9.
According to one or more embodiments, the information processing apparatus may comprise features corresponding to the steps of any of the embodiments of the method described herein.

According to further aspects of the present disclosure, a computer program and a non-transitory computer-readable recording medium are defined in claims 10 and 11, respectively.
According to one or more embodiments, a computer program comprises instructions which, when the program is executed by a computer, cause the computer to carry out the method of any one of the embodiments described herein.
According to one or more embodiments, a non-transitory computer-readable recording medium having stored therein instructions is configured to cause a computer to function as an information processing apparatus configured to carry out the method of any one of the embodiments described herein.

### BRIEF DESCRIPTION OF THE DRAWINGS

In the accompanying drawings:
FIG. 1 is a diagram illustrating a configuration of a waveform analysis system according to a comparative example;
FIG. 2 is a diagram illustrating an example configuration of a waveform analysis system used in one or more embodiments;
FIG. 3 is a block diagram illustrating an example hardware configuration of a cloud in FIG. 2;
FIG. 4 is a block diagram illustrating an example hardware configuration of a gateway in FIG. 2;
FIG. 5 is a block diagram illustrating an example hardware configuration of a waveform analyzer in FIG. 2;
FIG. 6 is a block diagram illustrating an example hardware configuration of a computer in FIG. 2;
FIG. 7 is a diagram schematically illustrating example operations of the waveform analysis system used in one or more embodiments;
FIG. 8 is a diagram schematically illustrating the example operations of the waveform analysis system used in one or more embodiments;
FIG. 9 is a sequence chart illustrating example operations of the waveform analysis system used in one or more embodiments;
FIG. 10 is a sequence chart illustrating example operations of the waveform analysis system used in one or more embodiments;
FIG. 11 is a flowchart illustrating example operations of the cloud in FIG. 2;
FIG. 12 is a flowchart illustrating example operations of the cloud in FIG. 2;
FIG. 13 is an example of a screen of the waveform analyzer to be displayed on the computer in FIG. 2;
FIG. 14 is an example of the screen of the waveform analyzer to be displayed on the computer in FIG. 2; and
FIG. 15 is a flowchart illustrating example operations of the cloud in FIG. 2.

### DESCRIPTION OF EMBODIMENTS

In the conventional configuration, there is room for improvement when a plurality of apparatuses is accessible to a plurality of waveform analyzers.

It would be helpful to provide technology that can improve systems in which a plurality of apparatuses is accessible to a plurality of waveform analyzers.

An information processing method according to one or more embodiments, by a controller of an information processing apparatus, includes the steps of:
receiving, by a communication interface, screen information regarding measurement information from a waveform analyzer acquiring the measurement information on a physical quantity;
transmitting, by the communication interface, the acquired screen information to a plurality of operation terminals;
receiving, from a first operation terminal of the plurality of operation terminals, a request for operation on the waveform analyzer through the screen information;
determining whether a control right to operate the waveform analyzer is granted to any operation terminal of the plurality of operation terminals except the first operation terminal; and
granting the control right to the first operation terminal when it is determined that the control right is not granted to any operation terminal of the plurality of operation terminals except the first operation terminal.

As described above, the controller permits only the operation terminal to which the control right is granted, among the plurality of operation terminals, to operation the waveform analyzer. Therefore, it is possible to prevent conflicting operation from the plurality of operation terminals, thus improving systems in which a plurality of apparatuses is accessible to a plurality of waveform analyzers.

In the information processing method according to one or more embodiments, the controller is configured to:
upon receiving the request from the first operation terminal, when it is determined that the control right is granted to a second operation terminal of the plurality of operation terminals, transmit, by the communication interface, information inquiring whether to release the control right to the second operation terminal; and
upon receiving, from the second operation terminal, information indicating to release the control right, deprive the second operation terminal of the control right, and grant the control right to the first operation terminal.

As described above, upon receiving the request for operation from the first operation terminal when the control right has already been granted to the second operation terminal, the controller deprives the second operation terminal of the control right, after inquiring of the second operation terminal whether to release the control right, and grants the control right to the first operation terminal. Thus, it is possible to properly mediate the assignment of the control right between the operation terminals.

In the information processing method according to one or more embodiments, the controller is configured to, upon receiving, from the second operation terminal, information indicating not to release the control right, refuse the request from the first operation terminal.

Thus, it is possible to properly mediate the assignment of the control right between the operation terminals.

In the information processing method according to one or more embodiments, the controller is configured to:
upon receiving, by the communication interface, information on operation on the waveform analyzer from any operation terminal of the plurality of operation terminals, determine whether the control right is granted to the operation terminal;
when it is determined that the control right is granted to the operation terminal having transmitted the information on operation, generate, based on the information on operation, operation information capable of being analyzed by the waveform analyzer; and
transmit, by the communication interface, the operation information to the waveform analyzer.

Thus, only operation from the operation terminal that is determined to have been granted the control right can be accepted. Therefore, it is possible to properly mediate the assignment of the control right between the operation terminals.

In the information processing method according to one or more embodiments, the controller is configured to refuse operation by the operation terminal when it is determined that the control right is not granted to the operation terminal having transmitted the information on operation.

Thus, only operation from the operation terminal that is determined to have been granted the control right can be accepted. Therefore, it is possible to properly mediate the assignment of the control right between the operation terminals.

In the information processing method according to one or more embodiments, the controller is configured to:
receive, by the communication interface, first screen information of the screen information from a first waveform analyzer of the waveform analyzer;
receive, by the communication interface, second screen information of the screen information from a second waveform analyzer of the waveform analyzer; and
upon receiving, from any operation terminal of the plurality of operation terminals, information identifying the first waveform analyzer, transmit the first screen information to the plurality of operation terminals at a higher bit rate than the second screen information.

Thus, for the waveform analyzer with high priority, detailed screen information can be provided to the operation terminals while saving communication volume.

In the information processing method according to one or more embodiments, the controller is configured to, when the first waveform analyzer is operated by the operation terminal to which the control right is granted, receive information on operation on the first waveform analyzer, as the information identifying the first waveform analyzer.

Thus, it is possible to more preferentially provide the operation terminal with screen information on the waveform analyzer on which operation is being performed.

In the information processing method according to one or more embodiments, the controller is configured to, upon receiving the information identifying the first waveform analyzer from any operation terminal of the plurality of operation terminals, transmit, to the plurality of operation terminals, the first screen information with making at least any of an update rate or a resolution of the first screen information greater than that of the second screen information.

Thus, for the waveform analyzer with high priority, high quality screen information with at least any of a high update rate or a high resolution can be provided to the operation terminals while saving communication volume.

An information processing apparatus according to one or more embodiments includes a controller configured to:
receive, by a communication interface, screen information regarding measurement information from a waveform analyzer acquiring the measurement information on a physical quantity;
transmit, by the communication interface, the acquired screen information to a plurality of operation terminals;
receive, from a first operation terminal of the plurality of operation terminals, a request for operation on the waveform analyzer through the screen information;
determine whether a control right to operate the waveform analyzer is granted to any operation terminal of the plurality of operation terminals except the first operation terminal; and
grant the control right to the first operation terminal when it is determined that the control right is not granted to any operation terminal of the plurality of operation terminals except the first operation terminal.

As described above, the controller permits only the operation terminal to which the control right is granted, among the plurality of operation terminals, to operation the waveform analyzer. Therefore, it is possible to prevent conflicting operation from the plurality of operation terminals, thus improving systems in which a plurality of apparatuses is accessible to a plurality of waveform analyzers.

A program according to one or more embodiments is configured to cause a computer to function as an information processing apparatus configured to execute the operations of:
receiving, by a communication interface, screen information regarding measurement information from a waveform analyzer acquiring the measurement information on a physical quantity;
transmitting, by the communication interface, the acquired screen information to a plurality of operation terminals;
receiving, from a first operation terminal of the plurality of operation terminals, a request for operation on the waveform analyzer through the screen information;
determining whether a control right to operate the waveform analyzer is granted to any operation terminal of the plurality of operation terminals except the first operation terminal; and
granting the control right to the first operation terminal when it is determined that the control right is not granted to any operation terminal of the plurality of operation terminals except the first operation terminal.

As described above, only the operation terminal to which the control right is granted, among the plurality of operation terminals, is permitted to operation the waveform analyzer. Therefore, it is possible to prevent conflicting operation from the plurality of operation terminals, thus improving systems in which a plurality of apparatuses is accessible to a plurality of waveform analyzers.

### (Advantageous Effect)

According to one or more embodiments, systems in which a plurality of apparatuses is accessible to a plurality of waveform analyzers can be improved.

### <Comparative Example>

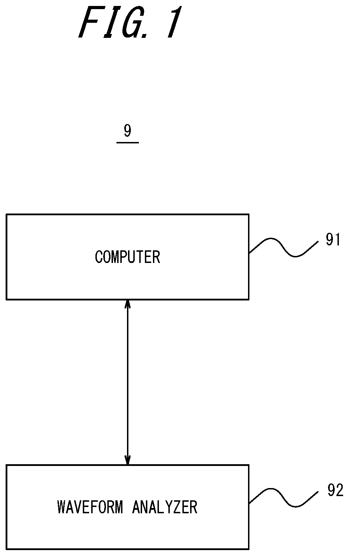

FIG. 1 illustrates a configuration of a waveform analysis system 9 according to a comparative example. The waveform analysis system 9 includes a computer 91 and a waveform analyzer 92. As illustrated in FIG. 1, in the waveform analysis system 9 according to the comparative example, the computer 91 and the waveform analyzer 92 are connected one-to-one.

The waveform analyzer 92 is an apparatus that measures a physical quantity and analyzes the measurement information. The computer 91 accesses the connected waveform analyzer 92, controls the operations of the waveform analyzer 92, and acquires and displays screen information from the waveform analyzer 92.

Consider a system in which a plurality of computers 91 and a plurality of waveform analyzers 92 are connected. Constructing such a system, by expanding the waveform analysis system 9 according to the comparative example, can cause various problems. For example, when the waveform analyzers 92 are controlled from the computers 91 in such a system, the plurality of computers 91 may try to operate the same waveform analyzer 92 at the same time, resulting in conflicting operation. Also, for example, when screen information is transmitted from the plurality of waveform analyzers 92 to the plurality of computers 91, a large amount of data flows between the apparatuses, which may exceed communication capacity. Thus, the configuration according to the comparative example has room for improvement when a plurality of apparatuses is accessible to a plurality of waveform analyzers.

Embodiments of the present disclosure will be described below with reference to the drawings. In the drawings, portions having the same configurations or functions are indicated with the same reference numerals. In the description of one or more embodiments, duplicate description of the same portions may be omitted or simplified as appropriate.

### (Waveform Analysis System)

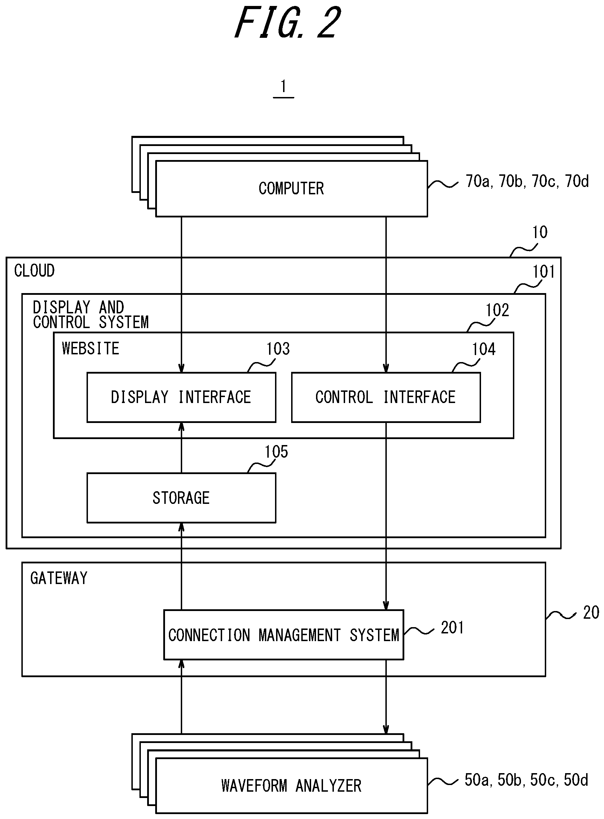

FIG. 2 illustrates an example configuration of a waveform analysis system 1 according to one or more embodiments. The waveform analysis system 1 includes a cloud 10, a gateway 20, a plurality of waveform analyzers 50 (50a, 50b, 50c, 50d), and a plurality of computers 70 (70a, 70b, 70c, 70d). As illustrated in FIG. 2, in the waveform analysis system 1, the plurality of computers 70 and the plurality of waveform analyzers 50 are connected via the cloud 10 and the gateway 20. The computers 70 and cloud 10, the cloud 10 and gateway 20, and the gateway 20 and waveform analyzers 50 are communicably connected by public communication lines such as the Internet, by intranets, or by dedicated communication lines. The waveform analysis system 1 allows the plurality of computers 70 to monitor and control the plurality of waveform analyzers 50 remotely via the cloud 10 on a network. The following describes an example in which the numbers of waveform analyzers 50 and computers 70 included in the waveform analysis system 1 are both four, but the numbers of waveform analyzers 50 and computers 70 can be any numbers.

The waveform analyzers 50 are apparatuses that acquire and analyze measurement information on physical quantities. Each of the waveform analyzers 50 analyzes measurement information on a physical quantity obtained by measurement and displays an analysis result as a waveform or the like on a graph. The waveform analyzers 50 may each be, for example, but not limited to, an oscilloscope, power measuring instrument, optical measuring instrument, pressure measuring instrument, or the like.

The waveform analyzers 50 control their operations based on operation information received from the gateway 20. The operation information is information generated in the cloud 10 based on operation input from a computer 70. Such operation information may include information regarding a change in settings of the waveform analyzers 50, information regarding operation related to measurement, or the like. The change in settings of the waveform analyzers 50 may include, for example, how a screen is displayed, channel on/off, or the like. The operation related to measurement may include, for example, starting, ending, or suspending measurement, saving waveform data related to measurement information, or the like. The waveform analyzers 50 transmit, to the gateway 20, information on the waveform analyzers 50 including measurement information on physical quantities, information on display screens, and the like. As the information on the display screens, the waveform analyzers 50 may transmit, to the gateway 20, frame information indicating images to be displayed on a display of an output interface 56 provided in each waveform analyzer 50 at specific update rates (frame rates).

Each of the computers 70, as operation terminals according to one or more embodiments, is an information processing apparatus that accesses the waveform analyzers 50 via the cloud 10 and the gateway 20, controls the operations of the waveform analyzers 50, and acquires and displays screen information on the waveform analyzers 50. Each of the computers 70 may be, for example, but not limited to, a personal computer (PC), a smartphone, or a tablet terminal. By operating a computer 70, a user can operate a desired waveform analyzer 50 and refer to measurement information on a physical quantity measured by the desired waveform analyzer 50, display screens, and the like. The computer 70 transmits identification information identifying a waveform analyzer 50 to be operated and information on operation to the waveform analyzer 50 to the cloud 10, in response to commands from the user.

The cloud 10 is an information processing apparatus that, in conjunction with the gateway 20, controls connection, communication, and the like between the plurality of computers 70 and the plurality of waveform analyzers 50. The cloud 10 may be, for example, but not limited to, a workstation (WS) or PC. The cloud 10 includes a display and control system 101.

The display and control system 101 is a functional element for displaying measurement information, display screens, and the like of the waveform analyzers 50 on the computers 70, and for controlling the operations of the waveform analyzers 50 by accepting operation from the computer 70. The display and control system 101 includes a website 102 and a storage 105.

The website 102 is a functional element that manages information for users to access the waveform analyzers 50 via browser (browsing) software running on the computers 70. The website 102 has a display interface 103 and a control interface 104.

The display interface 103 is a functional element that provides information on the waveform analyzers 50 recorded in the storage 105, described below, to the computers 70 in a format that can be displayed on displays of output interfaces 75 of the computers 70. For example, the display interface 103 provides a homepage using a language that can be interpreted by browser software, including hypertext markup language (HTML) and Javascript, to make the information on the waveform analyzers 50, which is acquired from the storage 105, viewable from the computers 70.

The control interface 104 is a functional element that accepts operation on a waveform analyzer 50 from a computer 70. Upon receiving, from the computer 70, identification information identifying a waveform analyzer 50 to be operated and information on operation, the control interface 104 converts the information into operation information that can be analyzed by the waveform analyzer 50. The specific contents indicated by the operation information are as described above. The control interface 104 transmits the operation information to the waveform analyzer 50 identified by the identification information via the gateway 20.

The storage 105 is a functional element that records information on the waveform analyzers 50 uploaded and received from the waveform analyzers 50 via the gateway 20. The storage 105 acts as a buffer to temporarily hold the information on the waveform analyzers 50 received from the gateway 20.

The gateway 20 is an apparatus that relays between the plurality of waveform analyzers 50 and the cloud 10. The gateway 20 includes a connection management system 201.

The connection management system 201 is a functional element that aggregates the plurality of waveform analyzers 50 and manages the connection between the plurality of waveform analyzers 50 and the cloud 10. The connection management system 201 acquires information on the waveform analyzers 50, including screen information, measurement information, and the like, from the waveform analyzers 50 and uploads the information on the waveform analyzers 50 to the display and control system 101 of the cloud 10. The connection management system 201 may upload the information on the waveform analyzers 50, together with the identification information on the waveform analyzers 50, to the display and control system 101. The connection management system 201 also transmits operation information received from a computer 70 via the control interface 104 to the waveform analyzers 50. The connection management system 201 may be physically connected to each of the waveform analyzers 50 by wired or wireless communication lines or through any network, including the Internet or an intranet.

The gateway 20 may be realized by the same information processing apparatus as the cloud 10. In other words, the gateway 20 may not be provided, and the cloud 10 may include a functional element equivalent to the connection management system 201.

In such a configuration described above, the control interface 104 of the cloud 10 assigns a control right to control the waveform analyzers 50 to only one of the plurality of computers 70. This control right is an authority to operate on the waveform analyzers 50. The cloud 10 may store, in a memory 12, information identifying which computer 70 the control right is assigned to. According to the waveform analysis system 1, the control right is assigned to only one computer 70, among the plurality of computers 70, thus preventing conflicting operation on the waveform analyzers 50.

Upon receiving information identifying any of the waveform analyzers 50 from the computer 70, the cloud 10 may transmit screen information on the identified waveform analyzer 50 to the computer 70 at a higher bit rate than the other waveform analyzers 50. Thus, according to the waveform analysis system 1, it is possible to transmit, to the computer 70, detailed information about the waveform analyzer 50 that receives an attention by the user, while saving overall communication volume.

The control interface 104 of the cloud 10 may be able to set up a control sequence based on commands from the computer 70 to which the control right is granted, and automatically control the waveform analyzers 50 according to that control sequence. According to such a configuration, the operations of the waveform analyzers 50 can be automated without the user of the computer 70 having to command the waveform analyzers 50 to perform each and every operation.

### (Cloud)

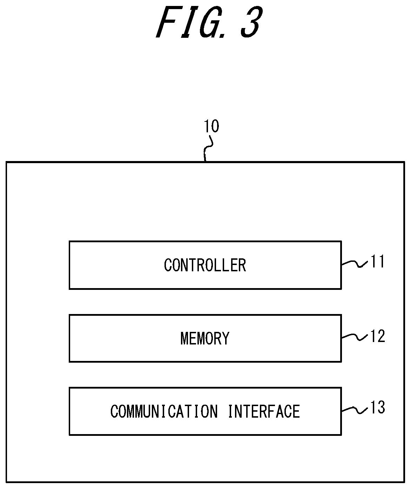

FIG. 3 is a block diagram illustrating an example hardware configuration of the cloud 10 in FIG. 2. As illustrated in FIG. 3, the cloud 10 includes a controller 11, a memory 12, and a communication interface 13.

The controller 11 includes one or more processors. In one or more embodiments, "processor" can be, but is not limited to, a general-purpose processor or a dedicated processor specialized for particular processing. The controller 11 is communicably connected to each component of the cloud 10 and controls the operations of the entire cloud 10.

The memory 12 includes, for example, any memory module such as a hard disk drive (HDD), solid state drive (SSD), read-only memory (ROM), or random access memory (RAM). The memory 12 may function, for example, as a main memory, an auxiliary memory, or a cache memory. The memory 12 stores any information to be used for the operations of the cloud 10. For example, the memory 12 may store a system program (system instructions), an application program, various information received from the gateway 20 via the communication interface 13, and the like. The memory 12 is not limited to those built into the cloud 10, but may be an external database or external memory module.

The communication interface 13 includes any communication module that can be connected to other apparatuses, such as the computers 70 and gateway 20, by any communication technology. The communication interface 13 may further include a communication control module for controlling communication with other apparatuses, and a memory module for storing communication data such as identification information required for communication with other apparatuses.

The functions of the cloud 10 can be realized by executing a computer program (instructions) according to one or more embodiments by a processor included in the controller 11. In other words, the functions of the cloud 10 can be realized by software. The computer program causes an information processing apparatus to execute processes of steps included in the operations of the cloud 10, thereby causing the information processing apparatus to realize functions corresponding to the processes of the steps. In other words, the computer program is a program for causing the information processing apparatus to function as the cloud 10. The computer program may be recorded on a recording medium (e.g. a non-transitory computer-readable recording medium) that can be read by the information processing apparatus. A program includes information that is used for processing by a computer and is equivalent to a program. For example, data that is not a direct command to the information processing apparatus but has the nature of defining the processing of the information processing apparatus falls under the category of "something equivalent to a program".

Some or all of the functions of the cloud 10 may be realized by a dedicated circuit included in the controller 11. In other words, some or all of the functions of the cloud 10 may be realized by hardware. The cloud 10 may be realized by a single information processing apparatus or by the cooperation of multiple information processing apparatuses.

### (Gateway)

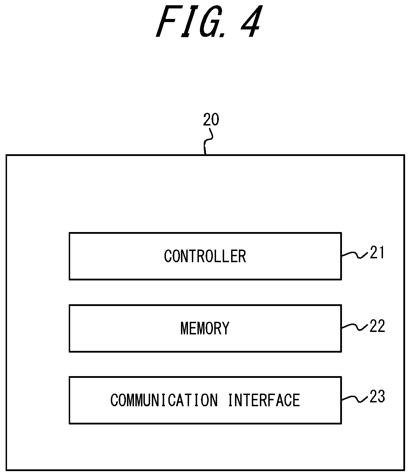

FIG. 4 is a block diagram illustrating an example hardware configuration of the gateway 20 in FIG. 2. The gateway 20 includes a controller 21, a memory 22, and a communication interface 23. The functions and roles of the controller 21, memory 22, and communication interface 23 of the gateway 20 are equivalent to those of the controller 11, memory 12, and communication interface 13 of the cloud 10, and detailed description is omitted. The functions of the gateway 20 are realized by software, but some or all of the functions thereof may be realized by hardware. The gateway 20 may be realized by a single information processing apparatus or by the cooperation of a plurality of information processing apparatuses.

### (Waveform Analyzer)

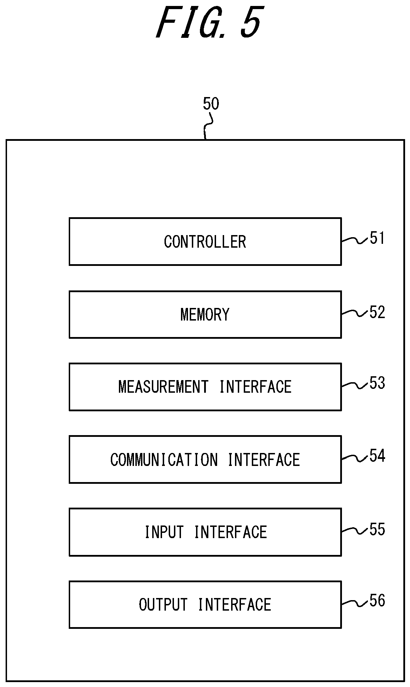

FIG. 5 is a block diagram illustrating an example hardware configuration of the waveform analyzer 50 in FIG. 2. The waveform analyzer 50 includes a controller 51, a memory 52, a measurement interface 53, a communication interface 54, an input interface 55, and an output interface 56. The functions and roles of the controller 51, memory 52, and communication interface 54 of the waveform analyzer 50 are equivalent to those of the controller 11, memory 12, and communication interface 13 of the cloud 10, and detailed description is omitted.

The measurement interface 53 is a functional element that acquires measurement information on a physical quantity. The physical quantity indicated by the measurement information acquired by the measurement interface 53 may include, but is not limited to, electrical measurements such as voltage, current, and power, as well as temperature, pressure, flow rate, level, strain, acceleration, pH, and humidity obtained through a sensor or transducer. The measurement interface 53 may be a sensor for measuring such a physical quantity, or may be realized as an interface to which a measurement apparatus for measuring such a physical quantity is connected.

The input interface 55 includes one or more input interfaces that accept input operation by an operator and acquire input information based on the operation by the operator. For example, the input interface 55 may be, but is not limited to, a physical key, a capacitive key, a pointing device, a touch screen integrated with a display of the output interface 56, or the like.

The output interface 56 includes one or more output interfaces that output information to the operator to notify the operator of the information. For example, the output interface 56 may be, but is not limited to, a display that outputs the information as an image, a speaker that outputs the information as audio, or the like. Such a display may be, for example, a liquid crystal panel display, an organic electroluminescence (EL) display, or the like. At least one of the input interface 55 or the output interface 56 described above may be configured integrally with the information processing apparatus 10, or may be provided separately.

Some or all of the functions of the waveform analyzer 50 may be realized by software. The waveform analyzer 50 may be realized by a single apparatus or by the cooperation of a plurality of apparatuses.

### (Computer)

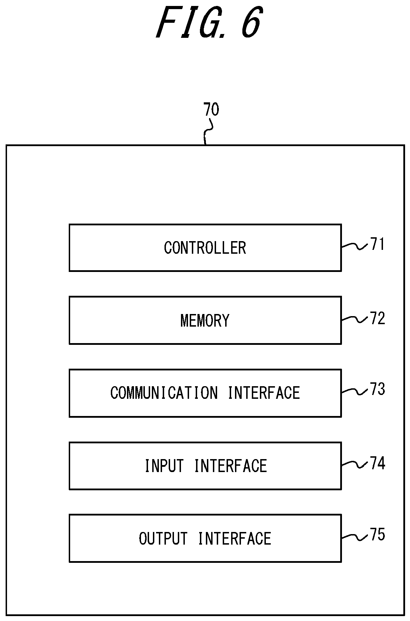

FIG. 6 is a block diagram illustrating an example hardware configuration of the computer 70 in FIG. 2. The computer 70 includes a controller 71, a memory 72, a communication interface 73, an input interface 74, and an output interface 75. The functions and roles of the controller 71, memory 72, communication interface 73, input interface 74, and output interface 75 of the computer 70 are equivalent to those of the controller 11, memory 12, and communication interface 13 of the cloud 10, and the input interface 55 and output interface 56 of the waveform analyzer 50, and detailed description is omitted. The functions of the computer 70 are realized by software, but some or all of the functions may be realized by hardware. The computer 70 may be realized by a single information processing apparatus or by the cooperation of a plurality of information processing apparatuses.

### (Example Operations)

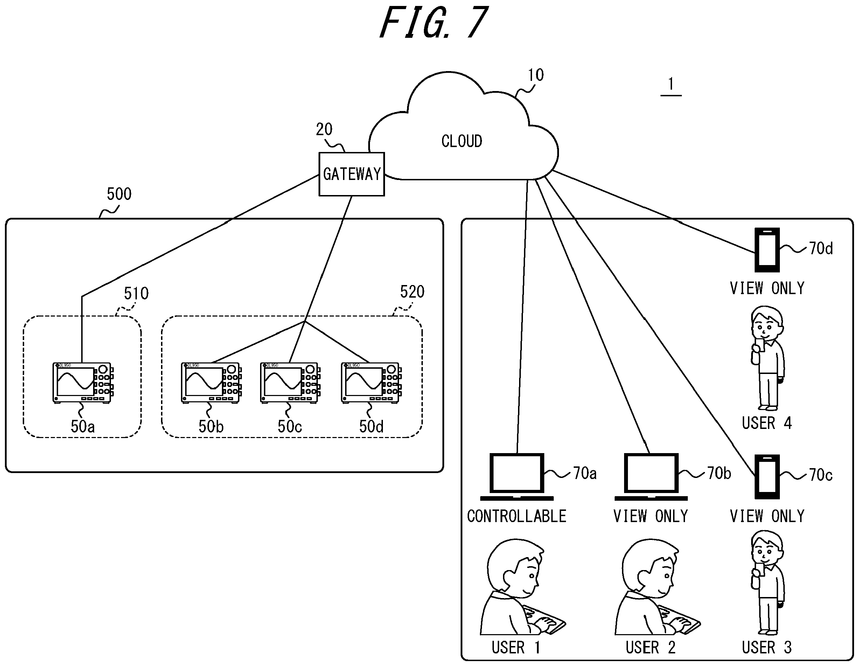

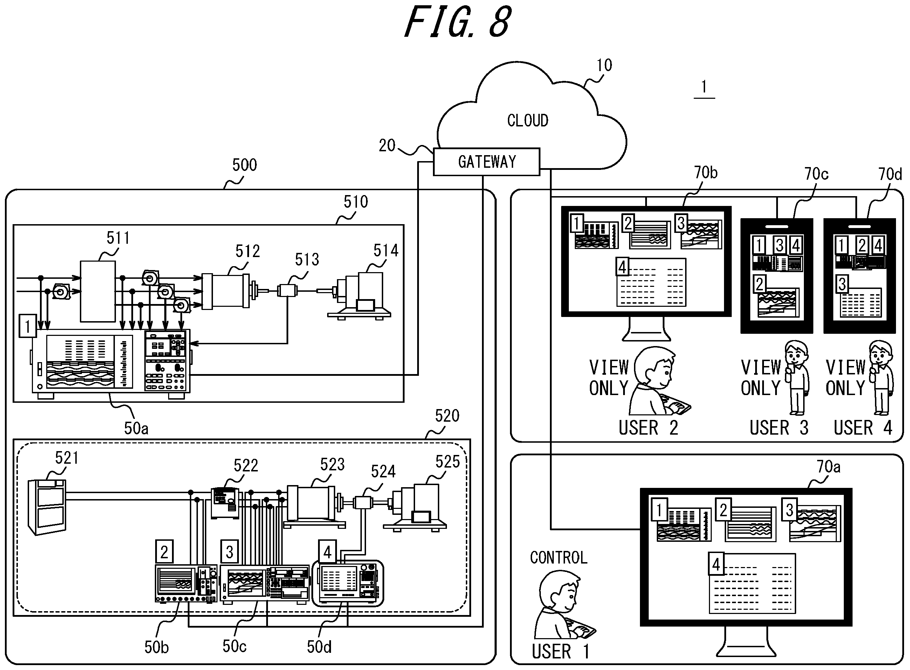

FIGS. 7 and 8 schematically illustrate example operations of the waveform analysis system 1 in FIG. 2. In the example of FIG. 7, the plurality of waveform analyzers 50a, 50b, 50c, and 50d are provided in an area 500. The area 500 may be, for example, a controlled area of the same company, specifically, an area in which an intranet is provided. The area 500 has partial areas 510 and 520 included therein. The areas 510 and 520 may be defined by geographic areas, for example, factories, plants, or the like. In the example of FIGS. 7 and 8, the waveform analyzer 50a is provided within the area 510, and the waveform analyzers 50b, 50c, and 50d are provided within the area 520. These waveform analyzers 50a, 50b, 50c, and 50d are connected to the cloud 10 via the gateway 20.

In FIG. 7, the computers 70a, 70b, 70c, and 70d are operated by users 1, 2, 3, and 4, respectively. In the example of FIG. 7, the computers 70a and 70b are realized by PCs, and the computers 70c and 70d are realized by smartphones. In the example in FIG. 7, a control right is granted to the computer 70a. As a result, the user 1 can operate and control the waveform analyzers 50 by operating the computer 70a. On the other hand, the users 2 to 4 can view measurement information and screen information on the waveform analyzers 50 via the computers 70b to 70d, respectively, but cannot operate the waveform analyzers 50. Therefore, it is possible to prevent a conflict of control due to operation from the plurality of computers 70 on the waveform analyzers 50.

FIG. 8 illustrates details of the example operation in FIG. 7. As illustrated in FIG. 8, an inverter 511, a motor 512, a torque meter 513, and a load 514 are installed in the area 510. The waveform analyzer 50a is connected to these devices and acquires measurement information on a physical quantity from each device. The waveform analyzer 50a displays screen information regarding the acquired measurement information on a display of the output interface 56. The waveform analyzer 50a may display measurement information on a device that is specified by the computer 70a to which the control right is granted, of the inverter 511, motor 512, torque meter 513, and load 514. The waveform analyzer 50a transmits the measurement information and the screen information to the cloud 10 via the gateway 20.

In the area 520, measurement devices such as a power supply 521, an inverter 522, a motor 523, a torque meter 524, and a load 525 are installed. The waveform analyzer 50b is connected to the power supply 521. The waveform analyzer 50c is connected to the inverter 522. The waveform analyzer 50d is connected to the motor 523, the torque meter 524, and the load 525. The respective waveform analyzers 50b, 50c, and 50d acquire measurement information on physical quantities from the connected devices. Each of the waveform analyzers 50b to 50d displays a screen regarding the acquired measurement information on a display of the output interface 56. The waveform analyzer 50d may display measurement information on a device specified by the input interface 55 or the computer 70a to which the control right is granted, of the motor 523, the torque meter 524, and the load 525. The waveform analyzers 50b to 50d transmit the measurement information and screen information to the cloud 10 via the gateway 20.

The computers 70a to 70d access the cloud 10 to acquire the measurement information and the screen information on the plurality of waveform analyzers 50a to 50d, and arrange and display the measurement information and the screen information side-by-side as illustrated in FIG. 8. Thus, the users can view the measurement information and the screen information on the plurality of waveform analyzers 50 simultaneously. As illustrated in FIG. 8, each computer 70 displays the screen information on a waveform analyzer 50 selected by the user in a larger size than that on the other waveform analyzers 50. In the example in FIG. 8, the computers 70a and 70b display the screen information on the waveform analyzer 50d in a larger size. The computer 70c displays the screen information on the waveform analyzer 50b in a larger size. The computer 70d displays the screen information on the waveform analyzer 50c in a larger size. Thus, the users can check the screen information on a desired waveform analyzer 50 in detail.

Since the control right is granted to the computer 70a, the user 1 can operate the waveform analyzer 50d by operating a screen of the waveform analyzer 50d displayed on a display of the output interface 75 of the computer 70a. The display interface 103 of the cloud 10 may generate a user interface (UI) for operating a physical switch such as a button or switch provided in the waveform analyzer 50, which is not displayed on the screen of the waveform analyzer 50, and may provide the UI to be viewable from the computer 70. Then, when the UI is selected by the user, the cloud 10 may generate corresponding operation information and transmit the operation information to the waveform analyzer 50 to perform that operation. According to such a configuration, the user of the computer 70 can perform remote operation equivalent to operating the physical switch provided in the waveform analyzer 50.

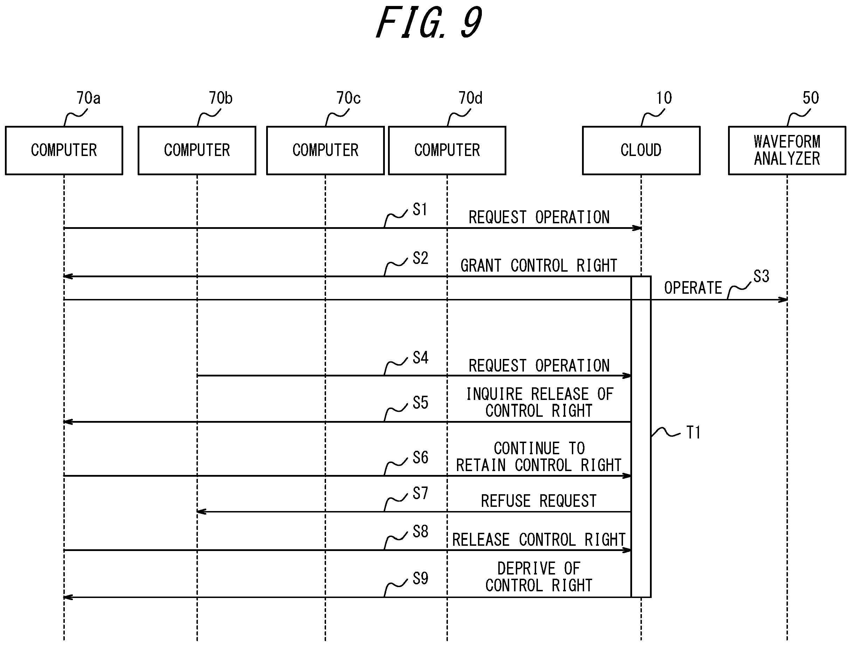

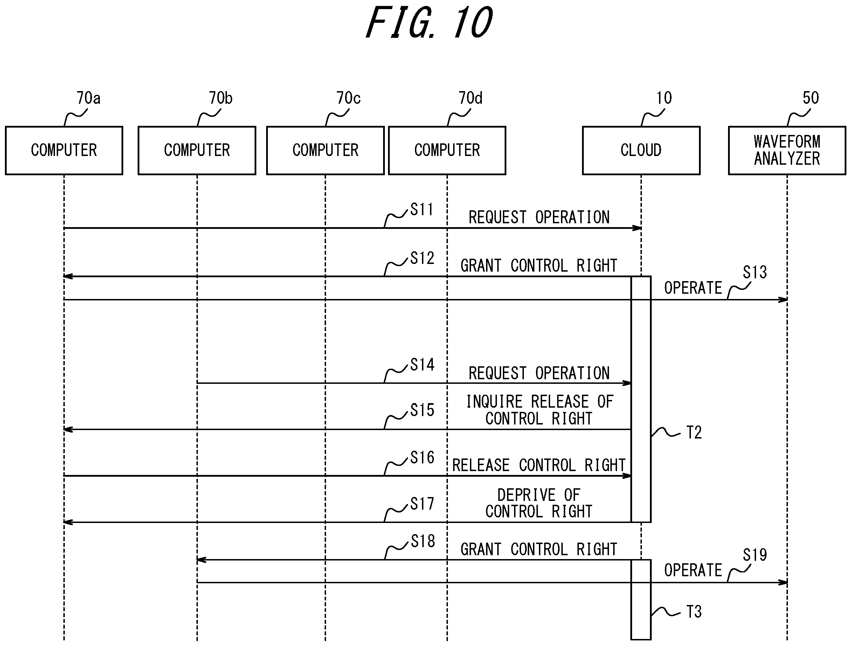

FIGS. 9 and 10 are sequence charts illustrating example operations of the waveform analysis system 1 according to one or more embodiments. For the sake of simplicity of explanation, FIGS. 9 and 10 illustrate an example in which there is one waveform analyzer 50, but the same applies when there is a plurality of waveform analyzers 50. The processes in FIG. 9 start with no control right granted to any of the computers 70a to 70d.

In step S1 of FIG. 9, the computer 70a requests operation on the waveform analyzer 50 to the cloud 10. The cloud 10 receives, from the computer 70a, the request for operation.

In step S2, the cloud 10 grants a control right to the computer 70a because the control right has not yet been granted to any of the computers 70. This starts a time period T1 during which the computer 70a can operate the waveform analyzer 50. In the time period T1, the computer 70a can perform operation on the waveform analyzer 50 (step S3).

In step S4, the computer 70b requests operation to the cloud 10.

Since the cloud 10 has already granted the control right to the computer 70a, the cloud 10 inquires of the computer 70a whether to release the control right (step S5).

Upon receiving, from the cloud 10, the inquiry as to whether to release the control right, the computer 70a determines whether to release the control right. For example, the computer 70a may determine whether to release the control right by receiving a command from the user 1. Alternatively, the computer 70a may determine to release the control right when no operation on the waveform analyzer 50 is input from the user 1 for a certain period of time. In the example of FIG. 9, the computer 70a determines to retain the control right without releasing the control right.

In step S6, the computer 70a notifies the cloud 10 of continuation of retainment of the control right. In response, the cloud 10 refuses the request for the control right from the computer 70b (step S7).

Subsequently, in step S8, the computer 70a notifies the cloud 10 of release of the control right. In response, the cloud 10 deprives the computer 70a of the control right (step S9).

In FIG. 9, the computer 70a responds to the inquiry as to whether to release the control right in step S5 that the computer 70a continues to retain the control right (step S6), but FIG. 10 illustrates an example of releasing the control right.

In step S 11 of FIG. 10, the computer 70a requests operation on the waveform analyzer 5 to the cloud 10. The cloud 10 receives, from the computer 70a, the request for operation.

In step S12, the cloud 10 grants a control right to the computer 70a. This starts a time period T2 during which the computer 70a can operate the waveform analyzer 50. In the time period T2, the computer 70a can perform operation on the waveform analyzer 50 (step S13).

In step S14, the computer 70b requests operation to the cloud 10. In response, the cloud 10 inquires of the computer 70a whether to release the control right (step S15).

In the example of FIG. 10, in response to the inquiry from the cloud 10, the computer 70a determines to release the control right. In step S16, the computer 70a notifies the cloud 10 of release of retainment of the control right. In response, the cloud 10 deprives the computer 70a of the control right (step S17). As a result, the time period T2 during which the computer 70a can operate the waveform analyzer 50 ends.

In step S18, the cloud 10 grants the control right to the computer 70b. This starts a time period T3 during which the computer 70b can operate the waveform analyzer 50. In the period T3, the computer 70b can perform operation on the waveform analyzer 50 (step S19).

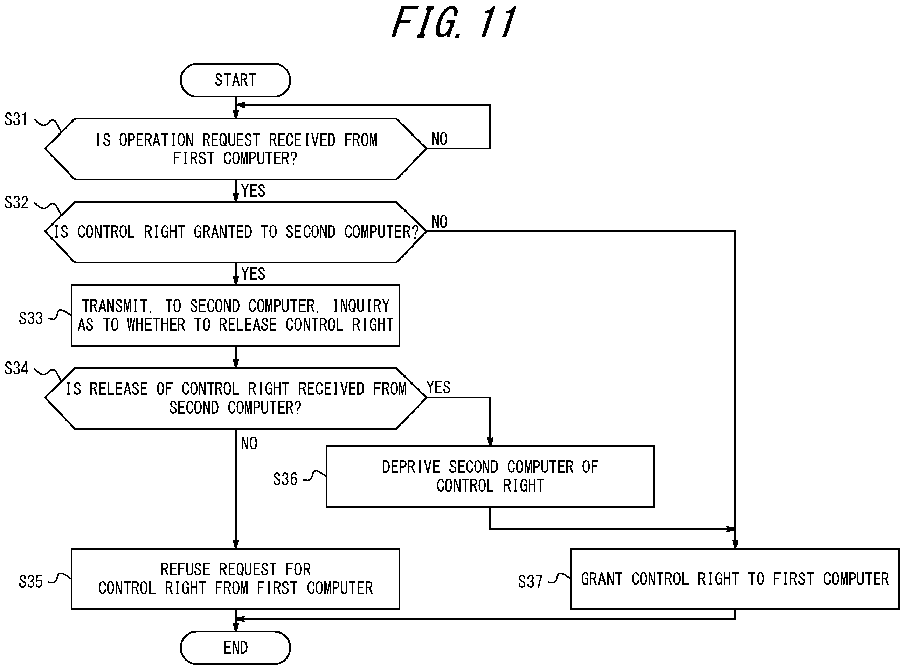

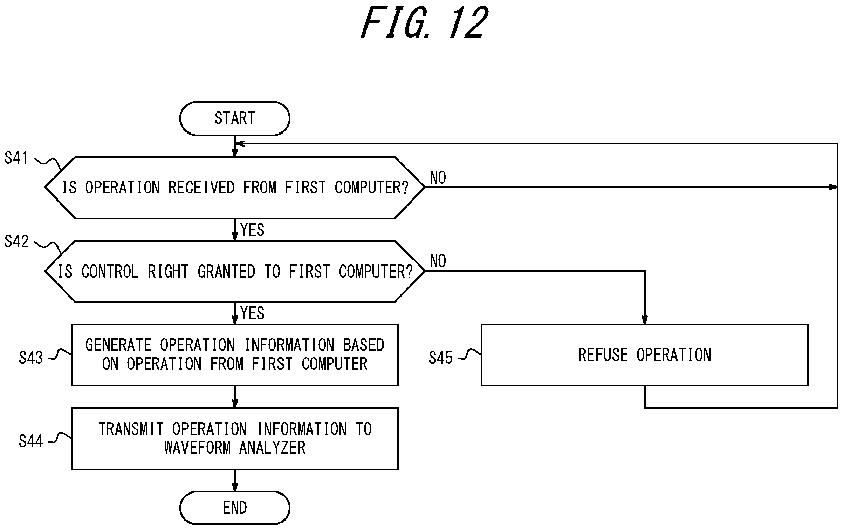

FIGS. 11 and 12 are flowcharts illustrating example operations of the cloud 10 in FIG. 2. The operations of the cloud 10 described with reference to FIGS. 11 and 12 can correspond to at least a part of an information processing method of an information processing apparatus according to one or more embodiments. Each step in FIGS. 11 and 12 is performed under the control of the controller 11 of the cloud 10.

FIG. 11 illustrates an example of a processing procedure in which the cloud 10 assigns a control right to a computer 70. In step S31, the controller 11 determines whether an operation request is received from a first computer (e.g., computer 70b) via the communication interface 13. Upon the operation request is received (YES in step S31), the controller 11 proceeds to step S32; otherwise (NO in step S31), the controller 11 waits as is.

In step S32, the controller 11 determines whether the control right is granted to any computer (a second computer, e.g., computer 70a) of the plurality of computers 70. When the control right is granted (YES in step S32), the controller 11 proceeds to step S33; otherwise (NO in step S32), the controller 11 proceeds to step S37.

In step S33, the controller 11 transmits, to the second computer (e.g., computer 70a), an inquiry as to whether to release the control right.

In step S34, the controller 11 determines whether a release of the control right is received from the second computer (e.g., computer 70a). When the release of the control right is received, the controller 11 proceeds to step S36; otherwise, the controller 11 proceeds to step S35.

In step S35, the controller 11 refuses the request for the control right from the first computer (e.g., computer 70b). The controller 11 then ends the processes in the flowchart.

In step S36, the controller 11 deprives the second computer (e.g., computer 70a) of the control right. The controller 11 then proceeds to step S37.

In step S37, the controller 11 grants the control right to the first computer (e.g., computer 70b). The controller 11 then ends the processes in the flowchart.

FIG. 12 illustrates an example of a processing procedure in which the cloud 10 receives operation from any of the computers 70. In step S41 of FIG. 12, the controller 11 determines whether information on operation is received from a first computer (e.g., computer 70b), along with identification information identifying a waveform analyzer 50 to be operated.

As described above, the computer 70 displays a screen of a waveform analyzer 50 on a display of the output interface 75. By accepting operation from a user via the screen information, the computer 70 identifies operation on the waveform analyzer 50 and transmits information indicating the contents of the operation to the cloud 10, along with identification information on the waveform analyzer 50.

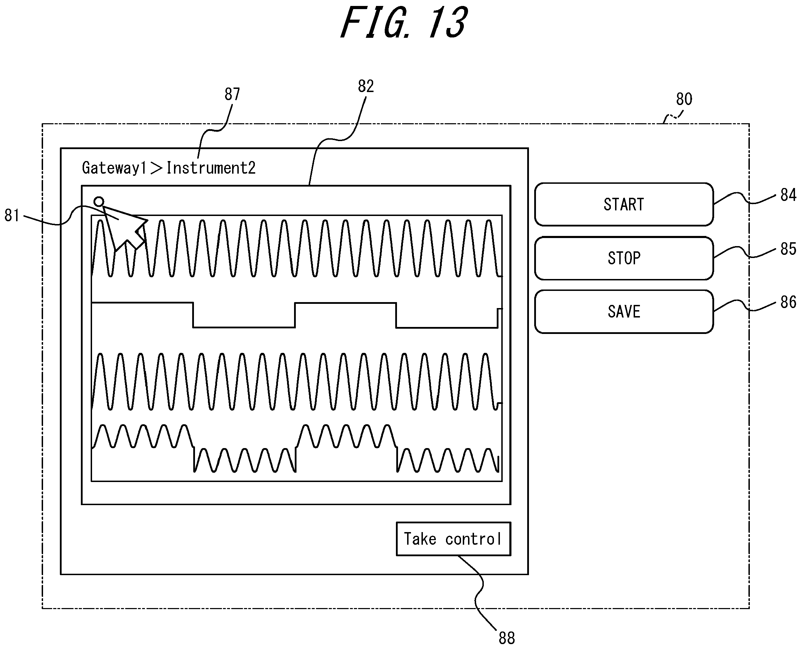

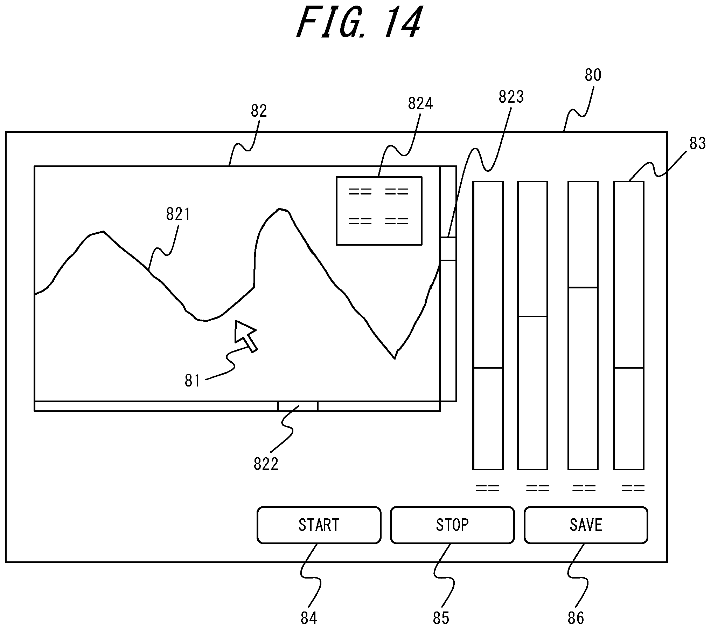

Operations of the computer 70 accepting operation from the user via the screen information will be described with reference to FIGS. 13 and 14. FIGS. 13 and 14 are examples of screens of waveform analyzers 50 to be displayed on the computers 70 in FIG. 2. FIGS. 13 and 14 each illustrate an image 80 of a screen of any waveform analyzer (e.g., waveform analyzer 50d) of the plurality of waveform analyzers 50. As in FIG. 8, the computer 70 may display an image illustrating a screen for each of the plurality of waveform analyzers 50.

In FIG. 13, the image 80 includes a display area 82 of a graph regarding measurement information, a start button 84, a stop button 85, a save button 86, an area 87, and a control request button 88. The display area 82 is an area for displaying display information on a waveform analyzer 50 to be displayed (e.g., waveform analyzer 50d) selected by a user, and displays the same image as an image to be displayed on a display of the output interface 56 provided in the waveform analyzer 50. The start button 84 is a button for indicating a start of measurement. The stop button 85 is a button for indicating an end of measurement. The save button 86 is a button for commanding an operation of storing a measurement result in the memory 52 of the waveform analyzer 50 or the memory 12 of the cloud 10. The area 87 is an area for displaying information that allows the user to recognize the waveform analyzer 50 (e.g., waveform analyzer 50d) whose measurement information is displayed. The control request button 88 is a button for transmitting a control (operation) request to the cloud 10 in response to selection of the user.

The user can operate a pointer 81 by entering a command to the input interface 74 of the computer 70. For example, the user may operate the pointer 81 by operating a pointing device, keyboard, or touch panel of the output interface 75. When such operation is performed by the user, the computer 70 may transmit, to the cloud 10, information on the coordinates of the pointer 81, the presence or absence of selection operation, or the like, as information on operation. For example, when the user selects (clicks) any pixel in the image 80 by operating the pointer 81, the computer 70 transmits coordinates in the image selected by the user to the waveform analyzer 50 via the cloud 10 and the gateway 20. Upon receiving the coordinates, the waveform analyzer 50 recognizes that the pixel corresponding to the coordinates has been touch-operated and performs a predetermined operation.

When the start button 84 is selected, the computer 70 may transmit, to the cloud 10, information indicating a start of measurement, as information on operation. Similarly, the computer 70 may transmit, to the cloud 10, information indicating an end of measurement when the stop button 85 is selected, and information indicating saving of a measured value when the save button 86 is selected, as information on operation.

FIG. 14 is another example of the screen of the waveform analyzer 50 to be displayed on the computers 70 in FIG. 2. While FIG. 13 illustrates an example of the screen of the waveform analyzer 50 displayed as is, FIG. 14 illustrates an example of extracting and displaying a graph of a waveform or the like included in the screen of the waveform analyzer 50. In the example of FIG. 14, an image 80 has display areas 82 and 83, a start button 84, a stop button 85, and a save button 86. The display areas 82 and 83 are display areas for a graph of a waveform or the like included in the screen of the waveform analyzer 50. The display area 82 has a graph 821, scroll bars 822, 823, and a display area 824. In the example of FIG. 14, for example, the user can switch the display area of the graph 821 by selecting and moving the scroll bars 822 and 823 by operating the pointer 81. The start button 84, stop button 85, and save button 86 are the same as in FIG. 13.

Return to explanation in FIG. 12. In step S41, when the information on operation as described above is received (YES in step S41), the controller 11 proceeds to step S42; otherwise (NO in step S41), the controller 11 waits as is.

In step S42, the controller 11 determines whether a control right is granted to a first computer (e.g., computer 70b). That is, the controller 11 determines whether the first computer (e.g., computer 70b) has the right to operate the waveform analyzers 50. The controller 11 may, for example, determine whether the control right is granted to the first computer (e.g., computer 70b) by referring to information, which is held by the memory 12, identifying which computer 70 the control right is assigned to. When the control right is assigned to the first computer (e.g., computer 70b) (YES in step S42), the controller 11 proceeds to step S43; otherwise (NO in step S42), the controller 11 proceeds to step S45.

In step S43, the controller 11 generates operation information based on the information on operation from the first computer (e.g., computer 70b).

In step S44, the controller 11 transmits the operation information generated in step S43 to a waveform analyzer 50 to be operated. Then, the controller 11 ends the processes in the flowchart.

In step S45, the controller 11 transmits information indicating a refusal of operation to the first computer (e.g., computer 70b). The controller 11 then ends the processes in the flowchart.

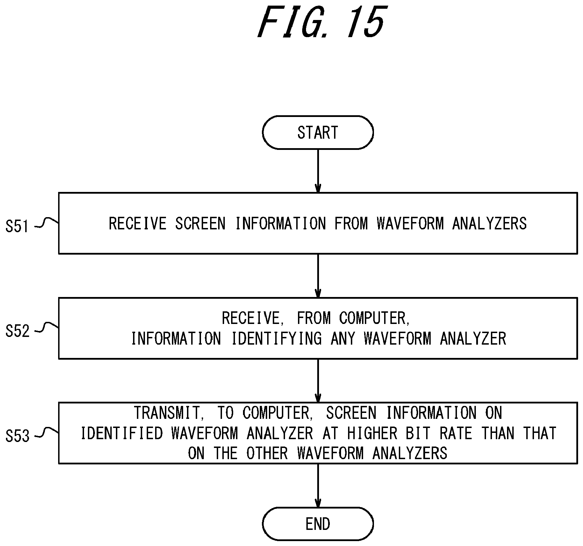

As described above, upon receiving information identifying any of the waveform analyzers 50 from a computer 70, the cloud 10 may transmit, to the computer 70, screen information on the identified waveform analyzer 50 at a higher bit rate than that on the other waveform analyzers 50. Such processes will be explained with reference to FIG. 15. FIG. 15 is a flowchart illustrating example operations of the cloud 10 in FIG. 2. The operations of the cloud 10 described with reference to FIG. 15 can correspond to at least a part of the information processing method of the information processing apparatus according to one or more embodiments. Each step of FIG. 15 is executed based on the control of the controller 11 of the cloud 10.

In step S51, the controller 11 receives screen information from each of the plurality of waveform analyzers 50.

In step S52, the controller 11 receives information identifying any of the waveform analyzers 50 from a computer 70. For example, when a particular waveform analyzer 50 is being operated by a computer 70 having a control right, the controller 11 may receive information on operation for the waveform analyzer 50, as information identifying the waveform analyzer 50. In this case, when a particular waveform analyzer 50 is being operated, screen information on the waveform analyzer 50 is to be transmitted at a higher bit rate than the other waveform analyzers 50.

In step S53, the controller 11 transmits the screen information on the waveform analyzer 50 identified in step S52 to the computer 70 at a higher bit rate than that on the other waveform analyzers 50. For example, the controller 11 may transmit the screen information on the identified waveform analyzer 50 at an increased bit rate and the screen information on the other waveform analyzers 50 at a decreased bit rate to the computer 70.

As described above, the controller 11 of the cloud 10 receives, via the communication interface 13, screen information regarding measurement information on physical quantities from the waveform analyzers 50 that acquire the measurement information, and transmits the acquired screen information to the plurality of computers 70 via the communication interface 13. Upon receiving, from a first computer (e.g., computer 70b), a request for operation on the waveform analyzers 50 via the screen information, the controller 11 determines whether a control right to operate the waveform analyzers 50 is granted to any computer 70 of the plurality of computers 70 except the first computer 70b. When it is determined that the control right is not granted to any computer 70 of the plurality of computers 70 except the first computer 70b, the controller 11 grants the control right to the first computer 70b.

### Technological Improvements

Thus, the controller 11 permits only the computer 70 to which the control right is granted, among the plurality of computers 70, to operate the waveform analyzers 50. Therefore, it is possible to prevent conflicting operation from the plurality of computers 70, thus improving systems in which a plurality of apparatuses is accessible to a plurality of waveform analyzers 50.

One or more embodiments describe an example in which the cloud 10 assigns a control right to operate all of the plurality of waveform analyzers 50 to a single computer 70, but is not limited to such a configuration. For example, for each area 510 or 520, the cloud 10 may assign, to a different computer 70, a control right to operate each waveform analyzer 50 included in the area. One or more embodiment describe an example configuration in which the waveform analysis system 1 includes the one gateway 20, but is not limited to such a configuration. For example, the waveform analysis system 1 may include a plurality of gateways 20, and, for each gateway 20, the cloud 10 may assign, to a computer 70, a control right to operate one or more waveform analyzers 50 connected to the gateway 20.

Upon receiving a request from a first computer 70b, when it is determined that the control right is granted to a second computer (e.g., computer 70a), the controller 11 may transmit, by the communication interface 13, information inquiring whether to release the control right to the second computer 70a. Upon receiving, from the second computer 70a, information indicating to release the control right, the controller 11 may deprive the second computer 70a of the control right, and grant the control right to the first computer 70b.

As described above, upon receiving the request for operation from the first computer 70b when the control right has already been granted to the second computer 70a, the controller 11 deprives the second computer 70a of the control right, after inquiring of the second computer 70a whether to release the control right, and grants the control right to the first computer 70b. Thus, it is possible to properly mediate the assignment of the control right between the computers 70.

Upon receiving, from the second computer 70a, information indicating not to release the control right, the controller 11 may refuse the request from the first computer (e.g., computer 70b). Thus, it is possible to properly mediate the assignment of the control right between the computers 70.

Upon receiving, by the communication interface 13, information on operation on a waveform analyzer 50 from any computer 70 of the plurality of computers 70, the controller 11 may determine whether the control right is granted to the computer 70. When it is determined that the control right is granted to the computer 70 having transmitted the information on operation, the controller 11 may generate, based on the information on operation, operation information capable of being analyzed by the waveform analyzer 50 and transmit, by the communication interface 13, the operation information to the waveform analyzer 50. Thus, only operation from the computer 70 that is determined to have been granted the control right can be accepted. Therefore, it is possible to properly mediate the assignment of the control right between the computers 70.

Upon receiving, from a computer 70 to which a control right is granted, identification information on a waveform analyzer 50 along with information on operation, the controller 11 transmits operation information generated based on the operation information to the waveform analyzer 50 identified by the identification information. Therefore, a user can operate a desired waveform analyzer 50.

When it is determined that a control right is not granted to a computer 70 that has transmitted information on operation, the controller 11 may refuse operation from the computer 70. Thus, only operation from a computer 70 that is confirmed to have been granted the control right can be accepted, and it is possible to properly mediate the assignment of the control right between the computers 70.

The controller 11 may receive first screen information from a first waveform analyzer (e.g., waveform analyzer 50d) by the communication interface 13 and receive second screen information from a second waveform analyzer 50 (e.g., waveform analyzer 50c) by the communication interface 13. In such a case, upon receiving information identifying the first waveform analyzer 50d from any computer 70 of the plurality of computers 70, the controller 11 may transmit the first screen information to the plurality of computers 70 at a higher bit rate than the second screen information. Thus, detailed screen information on the waveform analyzer 50 with high priority can be provided to the computers 70, while saving communication volume.

When the first waveform analyzer 50d is being operated by a computer 70 to which a control right is granted, the controller 11 may receive information on operation on the first waveform analyzer 50d, as information identifying the first waveform analyzer 50d. Therefore, it is possible to more preferentially provide the computer 70 with screen information on a waveform analyzer 50 on which operation is being performed.

Upon receiving information identifying the first waveform analyzer 50d from any computer 70 of the plurality of computers 70, the controller 11 may transmit, to the plurality of computers 70, the first screen information with making at least any of an update rate or a resolution of the first screen information greater than that of the second screen information. Thus, for the waveform analyzer 50 with high priority, high quality screen information with at least any of a high update rate or a high resolution can be provided to the computers 70 while saving communication volume.

The controller 11 may transmit a display screen of a computer (e.g., computer 70a) to which a control right is granted to all the computers 70. This allows another computer to know that the computer 70a is controlling a certain waveform analyzer (e.g., waveform analyzer 50d).

As described above, the waveform analysis system 1 allows the computers 70 to connect to the waveform analyzers 50 via the cloud 10 on the network. Therefore, a user of a computer 70 can remotely check and control the status of the waveform analyzers 50 without having to visit a site where the waveform analyzers 50 are installed. For example, the user can simultaneously check and control the status of the plurality of waveform analyzers 50, which can be used for remote monitoring and remote development applications. In addition, due to the possibility of connection to the plurality of computers 70, the waveform analysis system 1 can also be used for collaborative development and education applications.

In the waveform analysis system 1, the plurality of computers 70 and the plurality of waveform analyzers 50 can be connected via the cloud 10 on the network. Therefore, the waveform analysis system 1 can be deployed, for example, for measurement of experimental environments from remote locations, collaborative development from remote locations, equipment monitoring from remote locations, education and training using waveform analyzers from remote locations, customer support from remote locations, and the like. The waveform analysis system 1 can not only monitor the waveform analyzers 50, but also remotely control operations of the waveform analyzers 50 as needed. Thus, for example, a user of a computer 70 can change waveform acquisition conditions of a waveform analyzer 50 to acquire waveform data, depending on a waveform status displayed on a screen of the waveform analyzer 50.

Examples of embodiments of the present disclosure are appended below.
[1] An information processing method of an information processing apparatus, by a controller of the information processing apparatus, the information processing method comprising the steps of:
   receiving, by a communication interface, screen information regarding measurement information from a waveform analyzer acquiring the measurement information on a physical quantity;
   transmitting, by the communication interface, the acquired screen information to a plurality of operation terminals;
   receiving, from a first operation terminal of the plurality of operation terminals, a request for operation on the waveform analyzer through the screen information;
   determining whether a control right to operate the waveform analyzer is granted to any operation terminal of the plurality of operation terminals except the first operation terminal; and
   granting the control right to the first operation terminal when it is determined that the control right is not granted to any operation terminal of the plurality of operation terminals except the first operation terminal.
[2] The information processing method according to [1], wherein the controller is configured to:
   upon receiving the request from the first operation terminal, when it is determined that the control right is granted to a second operation terminal of the plurality of operation terminals, transmit, by the communication interface, information inquiring whether to release the control right to the second operation terminal; and
   upon receiving, from the second operation terminal, information indicating to release the control right, deprive the second operation terminal of the control right, and grant the control right to the first operation terminal.
[3] The information processing method according to [2], wherein the controller is configured to, upon receiving, from the second operation terminal, information indicating not to release the control right, refuse the request from the first operation terminal.
[4] The information processing method according to any one of [1] to [3], wherein the controller is configured to:
   upon receiving, by the communication interface, information on operation on the waveform analyzer from any operation terminal of the plurality of operation terminals, determine whether the control right is granted to the operation terminal;
   when it is determined that the control right is granted to the operation terminal having transmitted the information on operation, generate, based on the information on operation, operation information capable of being analyzed by the waveform analyzer; and
   transmit, by the communication interface, the operation information to the waveform analyzer.
[5] The information processing method according to [4], wherein the controller is configured to refuse operation by the operation terminal when it is determined that the control right is not granted to the operation terminal having transmitted the information on operation.
[6] The information processing method according to any one of [1] to [5], wherein the controller is configured to:
   receive, by the communication interface, first screen information of the screen information from a first waveform analyzer of the waveform analyzer;
   receive, by the communication interface, second screen information of the screen information from a second waveform analyzer of the waveform analyzer; and
   upon receiving, from any operation terminal of the plurality of operation terminals, information identifying the first waveform analyzer, transmit the first screen information to the plurality of operation terminals at a higher bit rate than the second screen information.
[7] The information processing method according to [6], wherein the controller is configured to, when the first waveform analyzer is operated by the operation terminal to which the control right is granted, receive information on operation on the first waveform analyzer, as the information identifying the first waveform analyzer.
[8] The information processing method according to [6] or [7], wherein the controller is configured to, upon receiving the information identifying the first waveform analyzer from any operation terminal of the plurality of operation terminals, transmit, to the plurality of operation terminals, the first screen information with making at least any of an update rate or a resolution of the first screen information greater than that of the second screen information.
[9] An information processing apparatus comprising a controller configured to:
   receive, by a communication interface, screen information regarding measurement information from a waveform analyzer acquiring the measurement information on a physical quantity;
   transmit, by the communication interface, the acquired screen information to a plurality of operation terminals;
   receive, from a first operation terminal of the plurality of operation terminals, a request for operation on the waveform analyzer through the screen information;
   determine whether a control right to operate the waveform analyzer is granted to any operation terminal of the plurality of operation terminals except the first operation terminal; and
   grant the control right to the first operation terminal when it is determined that the control right is not granted to any operation terminal of the plurality of operation terminals except the first operation terminal.
[10] A program configured to cause a computer to function as an information processing apparatus configured to execute the operations of:
   receiving, by a communication interface, screen information regarding measurement information from a waveform analyzer acquiring the measurement information on a physical quantity;
   transmitting, by the communication interface, the acquired screen information to a plurality of operation terminals;
   receiving, from a first operation terminal of the plurality of operation terminals, a request for operation on the waveform analyzer through the screen information;
   determining whether a control right to operate the waveform analyzer is granted to any operation terminal of the plurality of operation terminals except the first operation terminal; and
   granting the control right to the first operation terminal when it is determined that the control right is not granted to any operation terminal of the plurality of operation terminals except the first operation terminal.

The present disclosure is not limited to the embodiments described above. For example, the multiple blocks described in the block diagram may be integrated, or one block may be split. Instead of being executed in chronological order according to the description, the multiple steps described in the flowchart may be executed in parallel or in a different order, depending on the processing capability of the device performing each step or as needed. Other changes may be made to the extent that they do not depart from the intent of the present disclosure. Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

## Claims

1. An information processing method by a controller (11) of an information processing apparatus, comprising:
receiving, by the controller (11) via a communication interface (13), screen information regarding measurement information on a physical quantity from one or more waveform analyzers (50) that acquire the measurement information;
transmitting, by the controller (11) via the communication interface (13), the acquired screen information to a plurality of operation terminals (70);
receiving, from a first operation terminal (70b) of the plurality of operation terminals (70), a request for operation on the one or more waveform analyzers (50) through the screen information;
determining, by the controller (11), whether a control right to operate the one or more waveform analyzers (50) is granted to any operation terminal of the plurality of operation terminals except the first operation terminal (70b); and
granting, by the controller (11), the control right to the first operation terminal (70b) in response to determining that the control right is not granted to any operation terminal of the plurality operation terminals except the first operation terminal (70b).

2. The information processing method according to claim 1, further comprising:
in response to determining that the control right is granted to a second operation terminal among the plurality of operation terminals (70) when the request is received from the first operation terminal (70b), transmitting, by the controller (11) via the communication interface (13), information inquiring whether to release the control right to the second operation terminal; and
upon receiving, from the second operation terminal, information indicating to release the control right, depriving, by the controller (11), the second operation terminal of the control right, and granting, by the controller (11), the control right to the first operation terminal (70b).

3. The information processing method according to claim 2, further comprising:
upon receiving, from the second operation terminal, information indicating not to release the control right, refusing, by the controller (11), the request from the first operation terminal (70b).

4. The information processing method according to any one of claims 1 to 3,, further comprising:
upon receiving, by the controller (11) via the communication interface (13), information on operation on the one or more waveform analyzers (50) from one of the plurality of operation terminals (70), determining, by the controller (11), whether the control right is granted to the one of the plurality of operation terminals (70);
in response to determining that the control right is granted to the one of the plurality of operation terminals (70), generating, by the controller (11), operation information that the one or more waveform analyzers (50) analyze based on the information on operation; and
transmit, by the controller (11) via the communication interface (13), the operation information to the one or more waveform analyzers (50).

5. The information processing method according to claim 4, further comprising:
refusing, by the controller (11), operation by the one of the plurality of operation terminals (70) in response to determining that the control right is not granted to the one of the plurality of operation terminals (70).

6. The information processing method according to any one of claims 1 to 5, , further comprising:
receiving, by the controller (11) via the communication interface (13), first screen information of the screen information from a first waveform analyzer (50a) of the one or more waveform analyzers (50);
receiving, by the controller (11) via the communication interface (13), second screen information of the screen information from a second waveform analyzer (50b) of the one or more waveform analyzers (50); and
upon receiving, from one of the plurality of operation terminals (70), information identifying the first waveform analyzer (50a), transmitting the first screen information to the plurality of operation terminals (70) at a higher bit rate than the second screen information.

7. The information processing method according to claim 6, further comprising:
when the first waveform analyzer (50a) is operated by the one of the plurality of operation terminals (70) to which the control right is granted, receiving information on operation on the first waveform analyzer (50a).

8. The information processing method according to claim 6 or claim 7, , further comprising:
upon receiving the information identifying the first waveform analyzer (50a) from any operation terminal of the plurality of operation terminals (70), transmitting, to the plurality of operation terminals (70), the first screen information with making one or more of an update rate and a resolution of the first screen information greater than the second screen information.

9. An information processing apparatus comprising:
a controller (11) configured to:
receive, via a communication interface (13), screen information regarding measurement information on a physical quantity from a waveform analyzer (50) that acquires the measurement information,
transmit, via the communication interface (13), the acquired screen information to operation terminals (70), and
receive, via the communication interface (13), from a first operation terminal (70b) of the plurality of operation terminals (70), a request for operation on the waveform analyzer (50) through the screen information;
determine whether a control right to operate the waveform analyzer (50) is granted to any operation terminal of the plurality of operation terminals (70) except the first operation terminal (70b), and
grant the control right to the first operation terminal (70b) in response to determining that the control right is not granted to any operation terminal of the plurality of operation terminals (70) except the first operation terminal (70b).

10. A computer program comprising instructions which, when the program is executed by a computer, cause the computer to carry out the method of any one of claims 1-8.

11. A non-transitory computer-readable recording medium storing instructions that cause a computer to carry out the method of any one of claims 1-8.
